# EUROPEAN PATENT SPECIFICATION

(11) **EP 2 143 916 B1**
(45) Date of publication and mention of the grant of the patent: **14.03.2012**
(21) Application number: 09164803.0
(22) Date of filing: 07.07.2009
(51) Int. Cl.: F02D 19/06, F02M 43/02

(54) **Dual fuel injection system and motor vehicle comprising such injection system**
Zweikraftstoffeinspritzsystem und Kraftfahrzeug mit einem solchen Einspritzsystem
Système d'injection à deux carburants et véhicule automobile comprenant un tel système d'injection

(30) Priority: 07.07.2008 NL 2001772; 26.03.2009 NL 2002674
(43) Date of publication of application: 13.01.2010
(73) Proprietor: Impco Technologies B.V., 2645 EG Delfgauw (NL)
(72) Inventor: van Veen, Thomas, 3551 CT, Utrecht (NL)
(74) Representative: Seitz, Holger Fritz Karl

(56) References cited:
- WO-A-02/063158
- DE-A1- 10 146 051
- DE-A1-102006 001 616
- DE-U1-202008 002 939
- FR-A- 2 902 147
- US-A1- 2008 035 119

## Description

The invention relates to a dual fuel injection system for an internal combustion engine, preferably a direct injection internal combustion engine, and to a motor vehicle comprising such injection system.

Traditionally, use has been made of separate injectors for different fuels in a same internal combustion engine. As an example, motor vehicles equipped with a liquid petrol gas (LPG) injection system were supplied with separate injection valves for the LPG fuel, in addition to gasoline injection valves.

DE 10 2006 001616 discloses a dual fuel injection system having an LPG reservoir and a gasoline or ethanol reservoir. The gasoline or ethanol can be pumped into the LPG tank as a spare fuel.

FR-A-2902147 discloses a diesel injection system having a diesel fuel reservoir and a vegetable oil fuel reservoir. A selector connects a corresponding fuel duct with an injection pump and connects a return duct with the respective fuel reservoir.

Recent developments in fuel injection include the application of direct gasoline injection systems. Here, gasoline is injected directly into a combustion chamber of the internal combustion engine. Improvements in fuel economy may be achieved thereby. Injection of LPG and gasoline via the same injection valves has been disclosed in DE101 46 051. Here, a high pressure pump provides a low pressure fuel or a medium pressure fuel to an injection rail. Injection valves inject the pressurized fuel. In order to supply the low pressure (gasoline) or medium pressure (LPG) fuel from respective reservoirs to the high pressure pump, two serially connected pumps are provided in the gasoline supply line from the gasoline reservoir, while a single pump is provided in the LPG supply line from the LPG reservoir.

A disadvantage of this configuration may be found in its complexity. As an example, next to the high pressure pump, a total of 3 additional fuel pumps is required.

The invention aims at improving such an injection system. According to an aspect of the invention, the injection system comprises
- a first fuel pump for pumping a first fuel,
- a second fuel pump for pumping at least a second fuel,
- a supply duct for supplying the second fuel to the second fuel pump, the supply duct comprising a junction connected to an outlet of the first fuel pump, to join the first fuel supplied by the first fuel pump into the supply duct,
- a high pressure pump, downstream of the second fuel pump, for pressurizing the first and/or second fuel, and
- an injector for injecting the pressurized first and/or second fuel into a combustion chamber of the internal combustion engine.

Operating the first respectively the second fuel pump (possibly in combination with a closing of suitably positioned valves) will supply the first respectively the second fuel to the high pressure pump. Operating the first fuel pump will supply the first fuel to the junction, into the supply duct, and via the second fuel pump to the high pressure pump. Operating the second pump, will supply the second fuel from the supply duct to the high pressure pump (the supply duct being arranged between a second fuel reservoir for holding the second fuel and the second fuel pump). The second fuel pump may however not only be applied to pressurize the second fuel, but also to increase a pressure of the first fuel by the series connection of the first and second fuel pumps that has been created. In case the first fuel is a liquid fuel (at ambient temperature and atmospheric pressure), such as gasoline, while the second fuel is a fuel which needs to be held at a pressure in order to maintain it in liquid state at ambient temperature, such as LPG, the first and second fuel pumps can be operated simultaneously in order to force a remainder of second fuel out of the high pressure pump by the first fuel, when a supply of the second fuel has been switched off. Thereby, second fuel vapor in the high pressure pump, injection valves etc, may be prevented without requiring an additional pump in order to further pressurize the first fuel. Generally speaking, the first fuel may comprise a liquid fuel, and the second fuel may comprise a liquefied fuel (such as LPG) or a gas fuel, such as CNG, i.e. compressed natural gas).

The injection system may further comprise a first fuel reservoir (e.g. fuel tank) for holding the first fuel, and a second fuel reservoir (e.g. fuel tank) for holding the second fuel. The first fuel reservoir may be connected to an inlet of the first fuel pump. The second fuel reservoir may be connected to the supply duct. Furthermore, the injection system may comprise a control device, such as a microcontroller, microprocessor, analogue or digital switching circuit etc. to control the first and/or second fuel pumps. The first and/or second fuel may comprise any fuel such as but not limited to gasoline, diesel, ethanol, compressed natural gas (CNG), LPG, biogas, etc. Also, mixtures of such fuels may be provided. In an embodiment, the first fuel may comprise a fuel which is in liquid state at room temperature and atmospheric pressure, such as gasoline, while the second fuel may comprise a fuel which is to be held in liquid form at room temperature by a pressurizing thereof, such as LPG. The first and second pumps may be mechanically or electrically driven and may be located in or adjoining the respective fuel reservoir, or separately there from. The high pressure pump may be arranged to supply to fuel at any suitable injection pressure, for example in a pressure range of tens to hundreds of bar (e.g. 30 to 150 or 30 to 200 bar), although higher pressures in an order of magnitude of thousands of bar are possible too.

In order to operate the first and second fuel pumps, the control device being arranged to: operate the first pump to supply the first fuel, and operate the second pump to supply the second fuel. Upon the above described transition from the first fuel to the second fuel, the control device may further be arranged to operate the first and second fuel pumps simultaneously at a transition from the second fuel to the first fuel, to pressurize first fuel so as to propel a remainder of second fuel in or towards the high pressure pump.

A one-way valve may be provided between the outlet of the first fuel pump and the junction, which may prevent the second fuel from flowing into the first fuel pump when not in operation

A bypass may be provided in parallel to the second fuel pump to bypass the second fuel pump, in order to allow the second fuel pump to be switched off. In such bypass, a one-way valve is placed to prevent fuel to flow from an outlet of the pump back to an inlet thereof. This bypass may allow operation of the injection system with the first fuel, when a remainder of the second fuel has been forced out of the high pressure pump and out of a supply duct towards the high pressure pump, while only operating the first fuel pump, thereby saving power consumption and reducing a flow resistance.

The control device may further be arranged to operate the first fuel pump upon a deactivation command, to flush at least the high pressure pump (and possibly a supply duct towards it and/or a high pressure injection rail) with the first fuel. Thereby, it may be prevented that second fuel is retained in those parts, which may cause starting problems as a reduced pressure upon switching of the injection system may evoke vapor of the second fuel in the mentioned parts. The first fuel pump may be operated for a predetermined time, e.g. until the mentioned parts are flushed with the first fuel.

Commonly, the high pressure pump is driven mechanically by the internal combustion engine. As a consequence, the high pressure pump stops when the engine is switched off. As a consequence, a remainder of the second fuel may, despite flushing by the first fuel, be left in the pump. Therefore, one-way valves, e.g. in combination with a shut off valve, may be provided at an inlet and an outlet of the high pressure pump, so as to retain fuel (which may comprise a remainder of the second fuel) in the high pressure pump in a non operating state, at a sufficiently high pressure so as to prevent vaporization thereof.
Different types of fuel may have different requirements as to a desired ratio of fuel and air, and may have different caloric value per volume unit. Therefore, different settings of a motor management system of the internal combustion engine may be desired for the different types of fuel, e.g. a different fuel - air ratio. It is not uncommon that dual fuel injection systems are based on mono fuel (mostly gasoline) solutions, such as found in gasoline cars. Thereto, it is desirable to change as little as possible of the original mono fuel system. Thereto, a sensitivity of a pressure sensor for sensing a fuel pressure behind the high pressure pump may be adapted to assure correct mixture composition at all circumstances by e.g. correcting for a combination of fuel density and lower combustion value. Alternatively, the correction may be.substantially proportionally to a combustion value of the first and second fuels. Thereby, a simple solution may be provided to allow an existing (mono fuel based) motor management system to operate in a bi fuel solution, as a sensitivity of the sensor may be altered depending on the type of fuel. The control device may be arranged to perform the sensitivity adaptation, e.g. by a digital scaling or analogue by selecting a suitable amplification or attenuation. A simple way to adapt the sensitivity may be to alter (e.g. amplify, attenuate) an analogue electrical output signal of the sensor: As an example, depending on a measured pressure and engine load, an (e.g. attenuated) pressure signal may be provided to the existing gasoline motor management system. The engine load can be measured by any suitable signal such as engine speed, throttle valve position, etc. As a result, the existing motor management system may regulate the output pressure of the high pressure pump in line with the change in the sensor output signal, so as to increase of decrease the pressure, when making use of the other fuel, e.g. LPG or CNG, which may provide that the injection valves of the engine- given the changed pressure-inject a more suitable amount of the fuel, so as to take account of the desired fuel air ratio of that type of fuel. A fine tuning may then be provided by a lambda sensor based control of the internal combustion engine, possibly in combination with a control of a time during which the injection valves are opened.

According to a further aspect of the invention, there is provided a dual fuel injection system, comprising:
- a first fuel pump for supplying a first fuel,
- a second fuel pump for supplying a second fuel,
- a high pressure pump, downstream of the first and second fuel pumps, for pressurizing the first and/or second fuel, and
- an injector for injecting the pressurized first and/or second fuel into a combustion chamber of the internal combustion engine,
a return duct being provided from the high pressure pump to a reservoir of the second fuel, the return duct for returning an excess of the second fuel back into the reservoir.

The dual fuel injection system according to this aspect of the invention may but not necessarily needs to be combined with all or some of the above described developments. Rather, this aspect of the invention could also be applied to other dual fuel injection systems, such as described in DE101 46 051. By providing a return duct from the high pressure pump instead of in a supply duct towards the high pressure pump, an increased flow of fuel through the high pressure pump may be obtained, as excess fuel supplied by the first and/or second pump but which thus exceeds an amount of fuel injected by the injection valve(s), flows via the high pressure pump to the return duct. Because of this flow, a fuel temperature in the high pressure pump may be reduced, hence reducing a risk of occurrence of fuel vapor. Thereby, a simplification of the system described in DE101 46 051 may be obtained, as cooling of LPG or CNG by a heat exchanger may be omitted. The return duct may be provided from e.g. a bypass of the high pressure pump, the bypass being located upstream of a high pressure part of the high pressure pump, allowing a relatively low cost return duct as high pressures therein are obviated and as it prevents interfering in the high pressure part of the system. Alternatively, the return duct may be provided from the high pressure part of the high pressure pump, which may increase a cooling effect.

The return duct may be provided with a back pressure valve, so as to regulate a fuel pressure in the return duct.

The dual fuel injection systems as described above may further comprise an accumulator, a supply duct towards the accumulator being connected downstream of the second fuel pump, an outlet duct from the accumulator being connected upstream of the second fuel pump, the inlet duct and outlet duct each comprising respectively an accumulator inlet closing valve, and an accumulator outlet closing valve, the control device being arranged to open the accumulator outlet closing valve at the transition from the second fuel to the first fuel. Thereby, pressurized first fuel (such as gasoline) stored in the accumulator may force away remaining second fuel (such as LPG) at the inlet of the second fuel pump.

In further embodiments of the dual fuel injection systems according to the invention, an overpressure release valve may be provided from a return duct of a high pressure injector rail, to a return duct towards the second fuel reservoir, to avoid a pressure drop in the injector rail, due to leakage of an existing overpressure release valve of the injector rail. A one way valve may be provided from the return duct of the high pressure pump to an inlet side of the overpressure release valve.

Further features and advantages of the invention will become clear from the appended drawings, wherein non limiting embodiments are shown, wherein:
Fig. 1 depicts a schematic diagram of an injection system according to an embodiment of the invention;
Fig. 2 depicts a schematic diagram of an injection system according to another embodiment the invention;
Fig. 3 depicts a schematic diagram of an injection system according to yet another embodiment of the invention;
Fig. 4 depicts a schematic diagram of an injection system according to a further embodiment;
Fig. 5 depicts a schematic diagram of an injection system according to a yet further embodiment;
Fig. 6 depicts a schematic diagram of an injection system according to a still further embodiment of the invention; and
Fig. 7 depicts a schematic diagram of an injection system according to a yet still further embodiment of the invention.

In the figures, similar or identical items are referred to by similar or identical reference numerals.

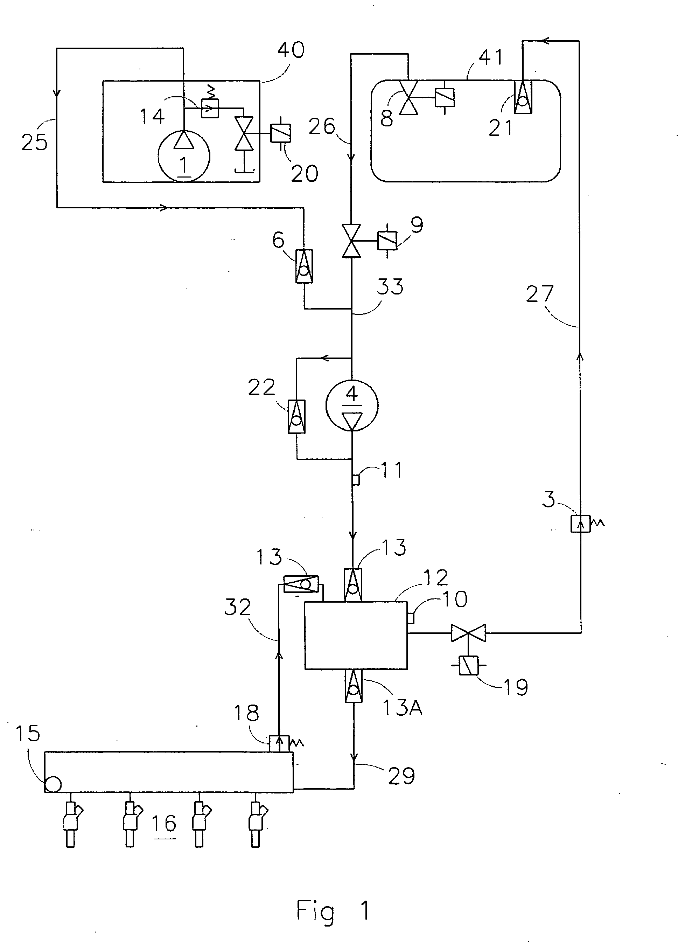

Fig. 1 depicts an injection system for direct injection of gasoline and LPG in an internal combustion engine of a motor vehicle. A gasoline (i.e. petrol) tank 40 is provided in which a gasoline pump 1 is housed, the pump having a back pressure valve that will open when the output pressure of pump 1 gets too high, causing fuel to flow back into the tank until the pressure is decreased. Such back pressure valve may be provided in e.g. a so called "returnless" fuel system. Hence, pressure is regulated by valve 14 in combination with valve 20.

LPG is held in an LPG tank 41 which is provided with closing valve 8. A supply duct 26 is provided from the LPG tank to the second fuel pump 4. Closing valve 9 is provided in the supply duct. Junction 33 of the supply duct 26 joins a duct from an output of the first fuel pump 1 into the supply duct 26. The supply duct 26 may have any suitable form and dimension, and the first and second fuel pumps may be separate pumps or integrated in respective fuel tanks: The first fuel pump may for example be integrated in the first fuel tank. The second fuel pump may be integrated in for example the second fuel tank. Gasoline and LPG ducts join at junction 33 before being provided to the second fuel pump 4. A bypass duct with one-way valve 22 may be provided to bypass the further pump 4 when not in operation. The second fuel pump 4 transports the LPG or gasoline to a high pressure pump 12 which compresses the fuel so as to reach an injection pressure, the compressed fuel is then guided via duct 29 to an injection rail which is provided with injectors 16. Excess fuel is guided back to the high pressure pump 12 via pressure valve 18 and duct 32. An LPG return duct towards the LPG tank is provided by duct 27 comprising closing valve 19 and pressure regulator 3. The return duct ends in the LPG tank at one way valve 21.

Operating on gasoline, the first fuel pump 1 is operated and fuel flows via the junction 33, via bypass valve 22 to the high pressure pump 12.

Operating on LPG, valves 8, 9 and 19 are opened and the second fuel pump 4 is operated. Pressure regulator 3 in the return duct provides for a resistance, thereby providing a constant pressure (preferably above a pressure in the LPG fuel tank) to the high pressure pump 12. Excess LPG flows back to the LPG tank, thereby providing a relatively high flow of LPG through the high pressure pump 12, which helps to reduce a fuel temperature of the LPG in the high pressure pump.

When changing from LPG to gasoline, valves 8 and 9 are closed. The second fuel pump 4 is still operated, causing pressure at junction 33 to lower. The first fuel pump 1 is now operated, while closing valve 20 is closed to maximize output pressure of the first pump 1. As the remaining pressure at 33 is lower than the pressure provided by pump 1, one way valve 6 opens, and fuel is provided from the first pump 1 to the second pump 4. The second pump 4, which is still in operation, now pressurizes the gasoline so as to force a remainder of the LPG via the high pressure pump 12 and return duct 27 back into the LPG tank. Then, valve 19 is closed and pump 4 deactivated, while valve 20 is opened. The second fuel pump is now bypassed via valve 22.

Operating on LPG requires approximately 25% or 30% more fuel to be injected compared with gasoline to take account of differences in combustion ratio requirements and/or other physical and chemical properties. This is achieved in that an output signal of the pressure sensor 15 at the fuel rail is attenuated before being provided to_a motor management system or other readout device, which causes an increase in the pressure buildup in the injection rail, as the motor management system or other readout device will counteract by increasing the pressure. If is undesirable to further increase pressure, e.g. because of safety limits, injection times may be prolonged by the motor management system to take account of the lower pressure signal value as perceived by the motor management system. Thereby, more LPG is injected to take the combustion ratio requirements into account. When switching from one fuel to another, the sensitivity of the sensor is adapted with a delay, such delay being based on the time required to inject a remainder of the fuel in the rail upon changeover to the other fuel.

Upon switching off the engine while operating on LPG, a remainder of LPG is forced out of the system by operating the first pump 1 to supply gasoline. By the flow of gasoline, the remaining LPG is propelled towards the high pressure pump and allowed to flow via the high pressure pump 12 and the return duct 27 into the LPG tank, valve 19 being kept open for this purpose. A remainder of LPG in the (non operating) high pressure pump 12 can be retained in the high pressure pump by valves 13 and 13A. Thus, after switching off the engine while driving on LPG, the system will switch to gasoline to remove to LPG out of the fuel lines and high pressure fuel pump. After removing the LPG, valve 19 is closed and together with one way valves 13 and 13A making sure remaining LPG in the high pressure pump cant vaporize because there is no place in the pump for the LPG to expand. In stead of one way valves 6 and shut off valve 9, two shut off valves or a 3-way ball valve may be applied,

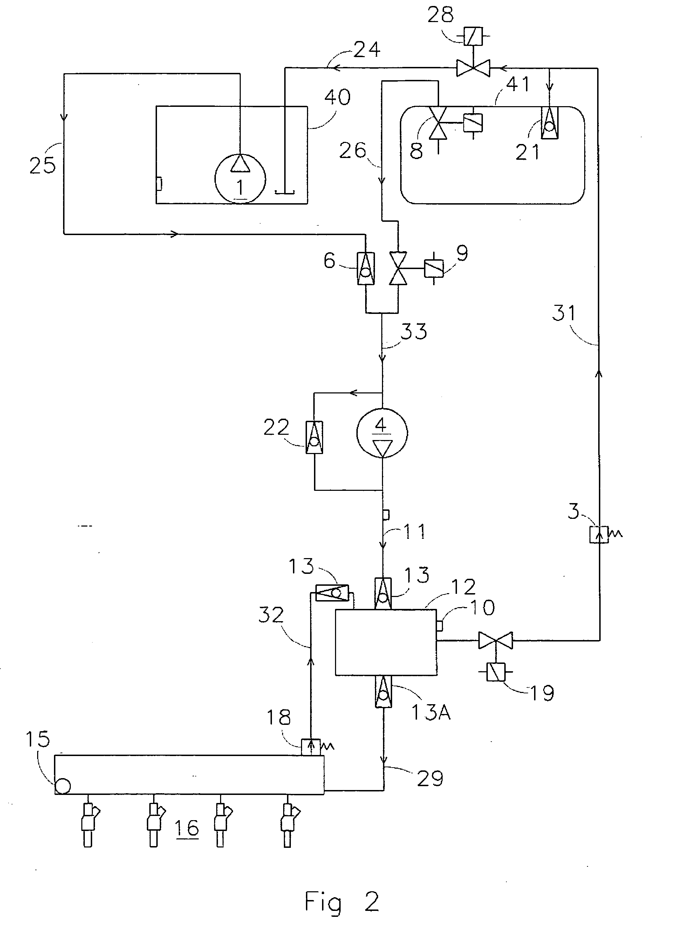

Fig. 2 depicts a configuration which is largely identical to that of fig. 1, however the closing valve 20 and pressure regulator valve 14 in the gasoline tank have been replaced by a return duct towards the gasoline tank. Thereto, instead of return duct 27 of fig. 1, a combined return duct 31 is provided which ends in the LPG tank via valve 21 as well as in the fuel tank via a closing valve 28. Operating on gasoline, closing valve 28 is opened, the resulting low fuel pressure in the return duct 31 causing valve 21 to close because of the pressure in the LPG tank. Operating on LPG, closing valve 28 is closed providing a set-up similar to that of fig. 1.

In the configuration according to fig. 2, when changing from LPG to gasoline, when duct 31 has been filled with gasoline, valve 28 is opened and the second fuel pump is switched off.

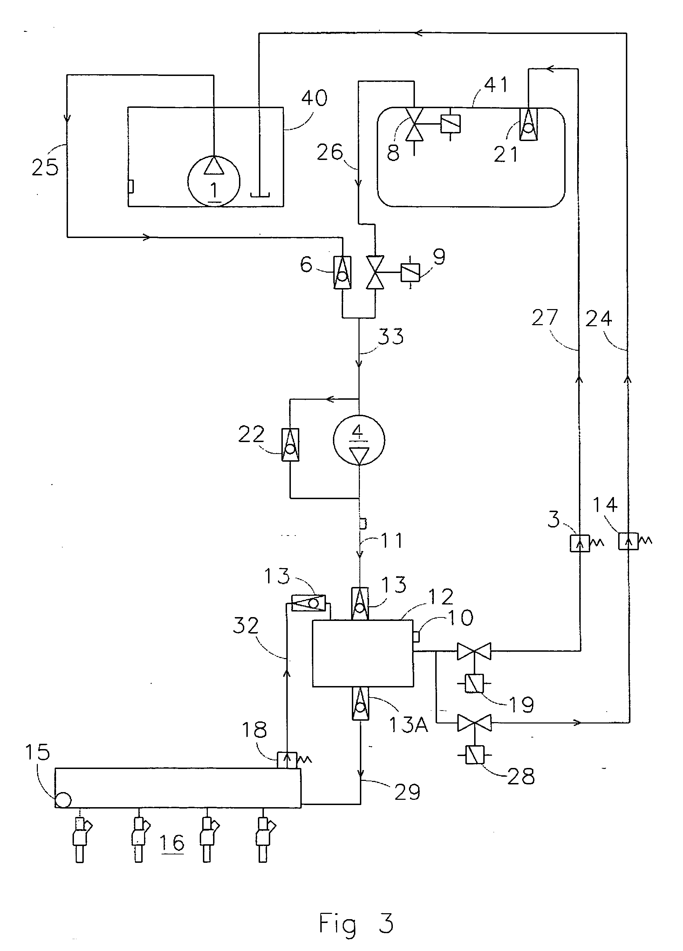

Fig. 3 depicts a configuration which is largely identical to that of fig. 2, however separate LPG and gasoline return ducts 27 and 24 are provided. This configuration may be used in a vehicle already provided with a gasoline return duct in mono fuel configuration. Operating on LPG, valves 8, 9, and 19 are open, pump 4 operating, and valve 28 is closed. Changing to gasoline, pump 1 is started, and valves 8 and 9 closed. Valve 6 opens as the pressure at 33 lowers while gasoline is provided via duct 25. Having filled the high pressure pump with gasoline, valve 19 is closed and valve 28 opened. The second fuel pump 4 can now be switched off.

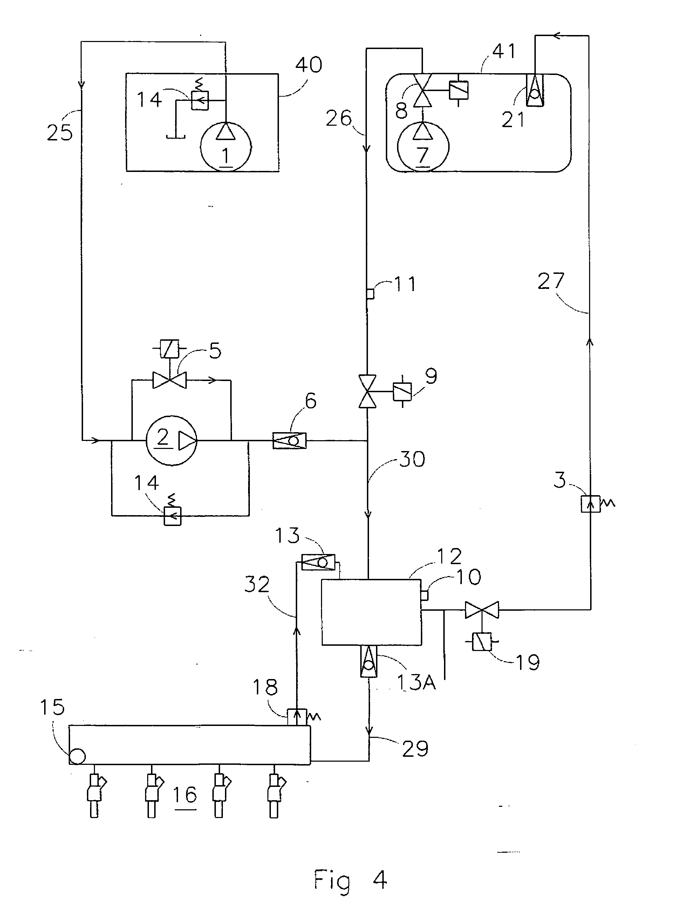

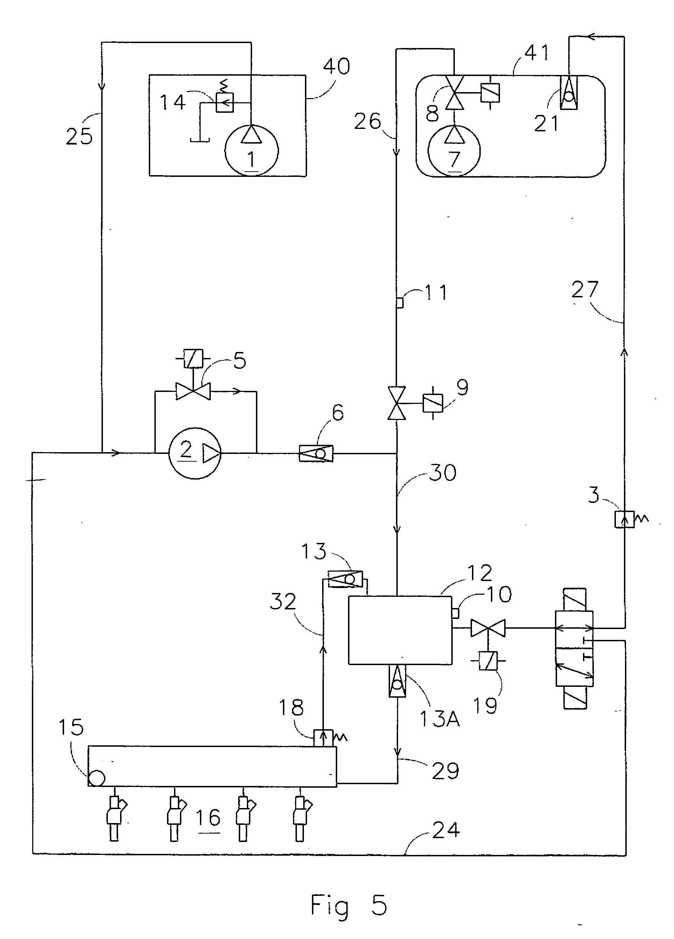

Fig. 4 and 5 depict a configuration wherein use is made of an additional fuel pump, resulting in gasoline pumps 1 and 2 and LPG pump 7. Although there configurations do not show all aspects of the invention, they illustrate that the feature of the return duct at the high pressure pump may be applied in other configurations too, thereby achieving same or similar advantages.

In some more detail, in fig. 4, operating on LPG, pump 7 is operated and valves 8, 9, and 19 are open causing LPG to flow to the high pressure pump 12 and via the return duct 27 back to the LPG tank. The flow of LPG through the high pressure pump lowers LPG temperature in this pump, hence decreasing a risk of generation of LPG vapor at the already elevated temperatures in the high pressure pump which is usually mounted near to or forming part of the engine. Switching to gasoline, pump 7 is stopped and valves 8 and 9 closed. Then, pump 2 is operated in addition to pump 1, which may already have been switched on, causing gasoline pressure to open valve 6 and to force a remainder of the LPG via the high pressure pump 12 and the return duct 27 to the LPG tank. Valve 19 can then be closed and operation of pump 2 be stopped. It is remarked that back pressure valve 34 serves to regulate a pressure of pump 2: at a too high pressure, valve 34 will open and allow a flow of the gasoline back to the entry of the pump. When not in operation, pump 2 can be bypassed, e.g. by valve 5.

In fig. 5, provides a variant to the configuration according to fig. 4. A return duct is provided to the LPG tank via valve assembly 23 and duct 27, as well as to the entry of pump 2, namely via valve assembly 23 and duct 24. When changing from LPG to fuel, LPG pump 7 is stopped, valves 8 and 9 closed, and pump 2 switched on. LPG flows back to the LPG tank via valve assembly 23 and return duct 27. Then, valve assembly 23 is set to provide a return path for the gasoline via duct 24, thereby preventing pump 2 to overheat caused by too much resistance.

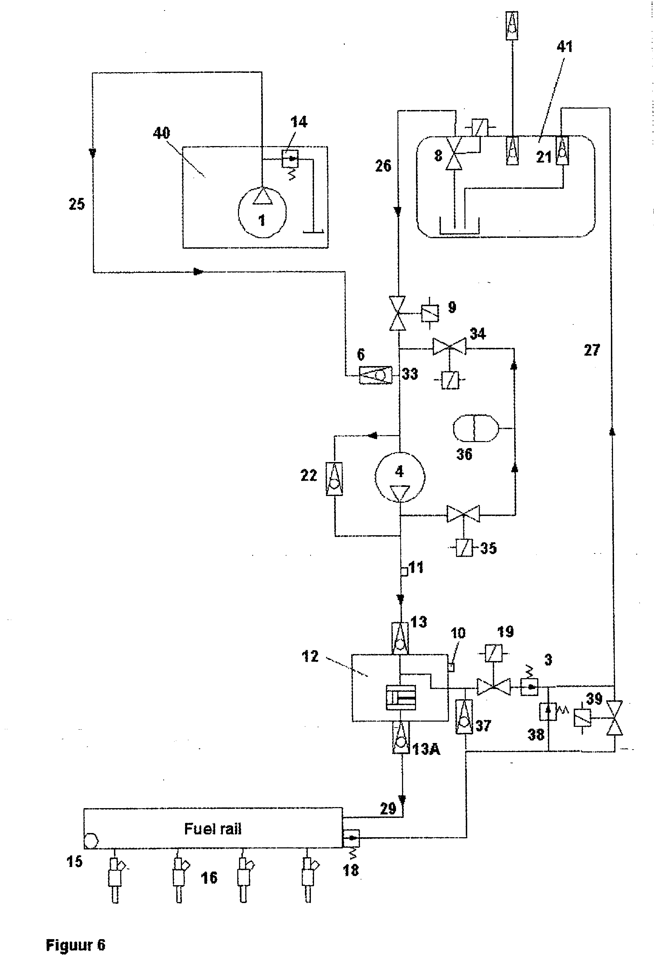

The configuration depicted in fig. 6 is provided with an accumulator 36 which can assist when switching from LPG to gasoline by providing an amount of pressurized gasoline in order to assist to overwin a high LPG pressure, which may e.g. occur at high temperatures or other circumstances. The accumulator 36 is connected via closing valve 35 to the outlet side of the pump 4. By opening valve 35 while at the same time closing LPG return valve 19 connected to the high pressure pump, gasoline from pump 4 flows towards the accumulator, thereby achieving a filling of the accumulator with a maximum pressure as provided by pump 4. The accumulator is further connected to an inlet side of the pump 4 via closure valve 34. By opening the closure valve 34, pressurized gasoline from the accumulator can flow towards the inlet of the pump 4. When switching from LPG to gasoline, the gasoline can force the remaining LPG towards the pump 4 by the pressure in the accumulator 36, even at a high LPG pressure. Thus, when operating with LPG, the valves 34 and 35 are closed, and when switching from LPG to gasoline, valves 8 and 9 are closed to stop a supply of LPG, while gasoline pump 1 is put into operation and pump 4 remains in operation. Valve 34 is opened to allow pressurized gasoline from the accumulator to flow towards pump 4. A vapour pressure of the remaining LPG in the duct towards the pump 4 is reduced, as a mixture of LPG and mostly gasoline is created. Then, valve 34 is closed and the pressure in the duct 33 towards the pump 4 is sufficiently low to open valve 6, allowing gasoline to flow via duct 25 towards the pump 4 and the high pressure pump. Then, when operating on gasoline, the accumulator is filled again with gasoline, as described above. Once the accumulator is filled, pump 4 is stopped, and gasoline flows towards the high pressure pump via the bypass 22 which bypasses pump 4. When having operated for a longer time period on LPG, a switch towards gasoline is made for a certain time period, thereby again pressurizing the accumulator. Such a switch towards gasoline can be made after a predetermined time period since a last operation on gasoline, or by monitoring a pressure of the gasoline in the accumulator and initiating a switch towards gasoline to fill the accumulator when the pressure has dropped below a predetermined threshold.

Fig. 6 further depicts an LPG return having an overpressure release valve 38 connected in series with the pressure valve 18. In tests, it has appeared that the pressure valve 18 may exhibit a small amount of leakage. Therefore, when the vehicle has operated on LPG, the remaining high pressure in the fuel rail may leak away after some time, e.g. several hours, causing LPG vapor in the fuel rail. The pressure valve 38 in this example has an opening pressure of 30 bar, causing the fuel rail to remain filled with liquid LPG with a maximum of 30 bar after the engine is turned off. A closure valve 39 is provided to bypass the pressure valve 38 when the engine is on, in order to prevent that the pressure valve 18 would open only at a to high pressure, because of the additional pressure valve 38.

In order to keep the pressure of the LPG in the high pressure pump at the required level during a time period in which the system is not in operation, the one way valve 13 is provided at the inlet of the high pressure pump, and closure valve 19 is provided in the return duct towards the LPG tank. In order to avoid an excess pressure in the high pressure pump, Thereto, a one way valve 37 is provided between the return duct of the high pressure pump, and the low pressure side of the pressure valve 18. Thereby, a connection is created from the high pressure pump, via return valve 37 and pressure valve 38, to the LPG tank, in order to discharge an excessive pressure from the high pressure pump into the LPG tank. This connection is provided via a one way valve, namely the one way valve 37, in order to avoid that LPG could flow back into the high pressure pump after transition from LPG to gasoline.

An alternative configuration applying an accumulator makes use of an overpressure in the high pressure pump, which overpressure may occur after switching off the engine. Then, overpressure in the pump (which could not be released as the valves 13, 13A are closed and which could lead to an unsafely high pressure in the pump) is allowed to flow via a duct from the high pressure pump to the accumulator. The operating pressure of the accumulator is chosen above a vapor pressure of the fuel (e.g. LPG). When starting the engine, LPG stored in the accumulator will flow back to the high pressure pump in order to ensure a sufficiently high pressure built up during the start of the engine (i.e. when the other pumps are starting their operation and pressure build up).

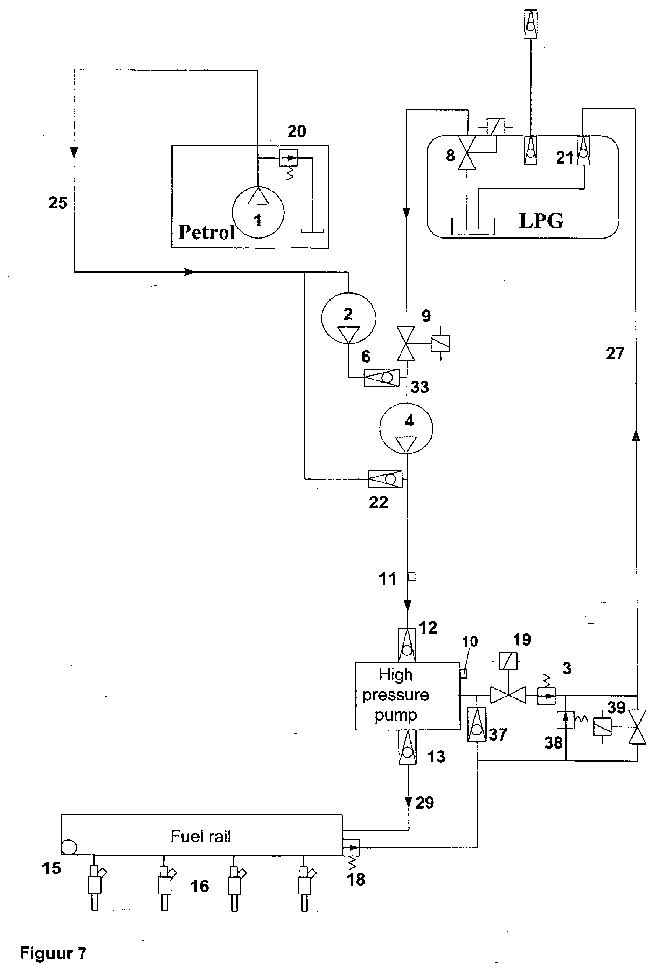

In the embodiment depicted in fig. 7, instead of providing the accumulator of the embodiment depicted in fig, 6, an additional fuel pump 2 is provided in series with the fuel pump 1. An outlet of the additional fuel pump 2 is connected via a one way valve 6 to the junction 33, a bypass being provided from the inlet of pump 2 to the outlet side of pump 4, the bypass comprising a one way valve to prevent a flow back of fuel into the gasoline tank. In order to increase a pressure of the gasoline, so as to be able to exceed the pressure of the LPG at junction 33, pump 2 can be switched on at a transition from LPG to gasoline. When all remaining gasoline has been forced out of the pump 4 and the supply duct between the pump 4 and the high pressure pump, the additional gasoline pump 2 can be switched off. The gasoline now flows from pump1 via duct 25 and one way valve 22 into the supply duct between the pump4 and the high pressure pump. Furthermore, at a start of the vehicle engine, the pumps 1, 2 and 4 can be operated simultaneously so as to generate a sufficiently high pressure in the high pressure pump 19 to liquefy second fuel even at high operating temperatures, so as to provide a reliable engine start even at high operating temperatures. During such as start procedure, closure valve 19 can be kept closed to assist in pressure buildup.

It is remarked that in the various configurations, temperature sensor 10 and pressure sensor 11 provide data to a control device (not shown) to monitor conditions that are required to maintain the LPG in a liquid state. Should the pressure be below a predetermined pressure threshold, and/or temperature be above a predetermined temperature threshold, thereby risking generation of LPG vapour, the injection system changes to gasoline.

It is further remarked that the pumps and valves in the various embodiments may be controlled by a suitable control device, comprising e.g. a microcontroller unit or programmable logic device (PLD) programmed with suitable software instructions, electronic control circuitry, etc.

## Claims

1. A dual fuel injection system for an internal combustion engine, comprising:
- a first fuel pump (1) for pumping a first fuel, the first fuel comprising a liquid fuel,
- a second fuel pump (4) for pumping at least a second fuel, the second fuel comprising a gas fuel or a liquefied gas fuel,
- a supply duct (26) arranged between a second fuel reservoir (41) for holding the second fuel and the second fuel pump (4) for supplying the second fuel from a second fuel reservoir (41) to the second fuel pump (4),
- a high pressure pump (12), downstream of the second fuel pump (4), for pressurizing the first and second fuel, and
- an injector (16) for injecting the pressurized first and second fuel into a combustion chamber of the internal combustion engine, **characterized in that** the supply duct comprising a junction (33) connected to an outlet of the first fuel pump (1), the junction (33) to join a duct from an output of the first fuel pump (1) into the supply duct (26) to join the first fuel supplied by the first fuel pump (1) into the supply duct (26), and
the dual fuel injection system further comprising a control device to control the first and second fuel pumps, the control device being arranged to:
operate the first fuel pump (1) to supply the first fuel;
operate the second fuel pump (4) to supply the second fuel, and
operate the first and second fuel pumps (1,4) simultaneously upon a transition from the second fuel to the first fuel, to pressurize first fuel so as to propel a remainder of second fuel in or
towards the high pressure pump (12).

2. The dual fuel injection system according to claim 1, wherein a one-way valve (6) is provided between the outlet of the first fuel pump (1) and the junction (33).

3. The dual fuel injection system according to claim 1 or 2, wherein a bypass duct comprising a one way valve (22) is provided in parallel to the second fuel pump (4) to bypass the second fuel pump.

4. The dual fuel injection system according to any of the preceding claims, wherein the control device is further arranged to operate the first fuel pump (1) upon a deactivation command, to flush at least the high pressure pump (12) with the first fuel.

5. The dual fuel injection system according to any of the preceding claims, wherein one-way valves (13,13A) are provided at an inlet and an outlet of the high pressure pump (12), to retain fuel in the high pressure pump (12) in a non operating state.

6. The dual fuel injection system according to any of the preceding claims, wherein a pressure sensor (15) is provided to sense a fuel pressure downstream of the high pressure pump (12) a sensitivity of the pressure sensor (15) being adapted substantially proportionally to a combustion value of the first and second fuels or being adapted to correct for a combination of density and lower combustion value of the first and second fuels.

7. The dual fuel injection system according to any of the preceding claims, wherein an additional first fuel pump (2) is provided in series with the first fuel pump (1), the control device being further arranged to operate the first fuel pump (1), the additional first fuel pump (2) and the second fuel pump simultaneously at an engine start.

8. A dual fuel injection system according to any of the preceding claims, comprising:
- a first fuel pump (1) for supplying a first fuel,
- a second fuel pump (4) for supplying a second fuel,
- a high pressure pump (12) downstream of the first and second fuel pumps (1,4), for pressurizing the first and second fuel, and
- an injector (16) for injecting the pressurized first and second fuel into a combustion chamber of the internal combustion engine,
a return duct (24;27;31) being provided from the high pressure pump (12) to the second fuel reservoir (45) of the second fuel, the return duct (24; 27; 31) for returning an excess of the second fuel back into the second fuel reservoir (41).

9. The dual fuel injection system according to claim 8, wherein the return duct is provided from a bypass of the high pressure pump (12), the bypass being located upstream of a high pressure part of the high pressure pump (12).

10. The dual fuel injection system according to claim 8 or 9, wherein the return duc (27) is provided with a back pressure valve (3).

11. The dual fuel injection system according to any of the preceding claims, comprising an accumulator, a supply duct towards the accumulator being connected downstream of the second fuel pump (4), an outlet duct from the accumulator being connected upstream of the second fuel pump (4), the inlet duct and outlet duct each comprising respectively an accumulator inlet closing valve, and an accumulator outlet closing valve, the control device being arranged to open the accumulator outlet closing valve at the transition from the second fuel to the first fuel.

12. The dual fuel injection system according to any of the preceding claims, wherein an overpressure release valve (38) is provided from a return duct of a high pressure injector rail, to a return duct (27) towards the second fuel reservoir (41).

13. The dual fuel injection system according to claim 12, wherein a one way valve (37) is provided from the return duct of the high pressure pump (12) to an inlet side of the overpressure release valve (38).

14. A motor vehicle comprising a dual fuel injection system according to any of the preceding claims.

## Patentansprüche

1. Dualbrennstoff-Einspritzsystem für eine Brennkraftmaschine, enthaltend:
- eine erste Brennstoffpumpe (1) zum Pumpen eines ersten Brennstoffes, wobei der erste Brennstoff einen flüssigen Brennstoff enthält,
- eine zweite Brennstoffpumpe (4) zum Pumpen wenigstens eines zweiten Brennstoffes, wobei der zweite Brennstoff einen Gasbrennstoff oder einen verflüssigten Gasbrennstoff enthält,
- eine Versorgungsleitung (26), die zwischen einem zweiten Brennstoffbehälter (41) für die Aufnahme des zweiten Brennstoffes und der zweiten Brennstoffpumpe (4) zum Zuführen des zweiten Brennstoffes von einem zweiten Brennstoffbehälter (41) zu der zweiten Brennstoffpumpe (4) angeordnet ist,
- eine Hochdruckpumpe (12), stromabwärts der zweiten Brennstoffpumpe (4), um den ersten und den zweiten Brennstoff unter Druck zu setzen, und
- einen Einspritzer (16) zum Einspritzen des unter Druck gesetzten ersten und zweiten Brennstoffes in einer Brennkammer der Brennkraftmaschine,
**dadurch gekennzeichnet, dass**
die Versorgungsleitung eine Verbindung (33) enthält, die mit einem Auslass der ersten Brennstoffpumpe (1) verbunden ist, wobei die Verbindung (33) dazu dient, eine Leitung von einem Auslass der ersten Brennstoffpumpe (1) mit der Versorgungsleitung (26) zu verbinden, um den ersten Brennstoff, der von der ersten Brennstoffpumpe (1) zugeführt wird, in die Versorgungsleitung (26) zu leiten, und
wobei das Dualbrennstoff-Einspritzsystem weiterhin eine Steuervorrichtung enthält, um die erste und die zweite Brennstoffpumpe zu steuern, und die Steuervorrichtung weiterhin dazu eingerichtet ist:
die erste Brennstoffpumpe (1) zu betätigen, um den ersten Brennstoff zuzuführen;
die zweite Brennstoffpumpe (4) zu betätigen, um den zweiten Brennstoff zuzuführen, und
die erste sowie die zweite Brennstoffpumpen (1, 4) bei einem Übergang von dem zweiten Brennstoff zu dem ersten Brennstoff gleichzeitig zu betätigen, um den ersten Brennstoff unter Druck zu setzen und so einen Rest des zweiten Brennstoffes in die oder zu der Hochdruckpumpe (12) zu treiben.

2. Dualbrennstoff-Einspritzsystem nach Anspruch 1, bei dem ein Einwegventil (6) zwischen dem Auslass der ersten Brennstoffpumpe (1) und der Verbindung (33) vorgesehen ist.

3. Dualbrennstoff-Einspritzsystem nach Anspruch 1 oder 2, bei dem eine Umgehungsleitung, die ein Einwegventil (22) enthält, parallel zu der zweiten Brennstoffpumpe (4) vorgesehen ist, um die zweite Brennstoffpumpe zu umgehen.

4. Dualbrennstoff-Einspritzsystem nach einem der vorhergehenden Ansprüche, bei dem die Steuervorrichtung weiterhin dazu eingerichtet ist, die erste Brennstoffpumpe (1) bei einem Deaktivierungsbefehl zu betätigen, um wenigstens die Hochdruckpumpe (12) mit dem ersten Brennstoff zu fluten.

5. Dualbrennstoff-Einspritzsystem nach einem der vorhergehenden Ansprüche, bei dem Einwegventile (13, 13A) an einem Einlass und einem Auslass der Hochdruckpumpe (12) vorgesehen sind, um Brennstoff in der Hochdruckpumpe (12) zu halten, wenn diese nicht in Betrieb ist.

6. Dualbrennstoff-Einspritzsystem nach einem der vorhergehenden Ansprüche, bei dem ein Drucksensor (15) vorgesehen ist, um einen Brennstoffdruck stromabwärts der Hochdruckpumpe (12) zu erfassen, wobei eine Empfindlichkeit des Drucksensors (15) im wesentlichen proportional zu einem Brennwert des ersten und des zweiten Brennstoffes eingerichtet ist oder dazu eingerichtet ist, eine Kombination aus Dichte und geringerem Brennwert des ersten und des zweiten Brennstoffes zu korrigieren.

7. Dualbrennstoff-Einspritzsystem nach einem der vorhergehenden Ansprüche, bei dem eine zusätzliche erste Brennstoffpumpe (2) in Reihe mit der ersten Brennstoffpumpe (1) vorgesehen ist, wobei die Steuervorrichtung weiterhin dazu eingerichtet ist, die erste Brennstoffpumpe (1), die zusätzliche erste Brennstoffpumpe (2) und die zweite Brennstoffpumpe beim Starten der Maschine gleichzeitig zu betätigen.

8. Dualbrennstoff-Einspritzsystem nach einem der vorhergehenden Ansprüche, enthaltend:
- eine erste Brennstoffpumpe (1) zum Zuführen eines ersten Brennstoffes,
- eine zweite Brennstoffpumpe (4) zum Zuführen eines zweiten Brennstoffes,
- eine Hochdruckpumpe (12), stromabwärts der ersten und der zweiten Brennstoffpumpen (1, 4), um den ersten und den zweiten Brennstoff unter Druck zu setzen, und
- einen Einspritzer (16) zum Einspritzen des unter Druck gesetzten ersten und zweiten Brennstoffes in eine Brennkammer der Brennkraftmaschine,
wobei eine Rücklaufleitung (24; 27; 31) von der Hochdruckpumpe (12) zu dem zweiten Brennstoffbehälter (41) für den zweiten Brennstoff vorgesehen ist, wobei diese Rücklaufleitung (24; 27; 31) dazu dient, einen Überschuss des zweiten Brennstoffes in den Brennstoffbehälter (41) für den zweiten Brennstoff rückzuführen.

9. Dualbrennstoff-Einspritzsystem nach Anspruch 8, bei dem die Rücklaufleitung von einer Umgehung der Hochdruckpumpe (12) vorgesehen ist, wobei die Umgehung stromaufwärtig von einem Hochdruckteil der Hochdruckpumpe (12) vorgesehen ist.

10. Dualbrennstoff-Einspritzsystem nach Anspruch 8 oder 9, bei dem die Rücklaufleitung (27) mit einem Rückschlagventil versehen ist.

11. Dualbrennstoff-Einspritzsystem nach einem der vorhergehenden Ansprüche, enthaltend einen Akkumulator, wobei eine Versorgungsleitung zu dem Akkumulator stromabwärts der zweiten Brennstoffpumpe (4) vorgesehen ist, eine Auslassleitung aus dem Akkumulator stromaufwärts der zweiten Brennstoffpumpe (4) angeschlossen ist, die Einlassleitung und die Auslassleitung jeweils ein Akkumulator-Einlassabsperrventil und ein Akkumulator-Auslassabsperrventil enthalten und die Steuervorrichtung dazu eingerichtet ist, das Akkumulator-Auslassabsperrventil an dem Übergang von dem zweiten Brennstoff zu dem ersten Brennstoff zu öffnen.

12. Dualbrennstoff-Einspritzsystem nach einem der vorhergehenden Ansprüche, bei dem ein Überdruckventil (38) in einer Rücklaufleitung von einer Hochdruck-Einspritzschiene zu einer Rücklaufleitung (27) zu dem zweiten Brennstoffbehälter (41) vorgesehen ist.

13. Dualbrennstoff-Einspritzsystem nach Anspruch 12, bei dem ein Einwegventil (37) in der Rücklaufleitung von der Hochdruckpumpe (12) zu einer Einlassseite des Überdruckventils (38) vorgesehen ist.

14. Kraftfahrzeug, enthaltend ein Dualbrennstoff-Einspritzsystem nach einem der vorhergehenden Ansprüche.

## Revendications

1. Système d'injection bicarburant pour à un moteur à combustion interne, comprenant :
- une première pompe de carburant (1) destinée à pomper un premier carburant, le premier carburant comprenant un carburant à l'état liquide,
- une seconde pompe de carburant (4) destinée à pomper au moins un second carburant, le second carburant comprenant un carburant à l'état gazeux ou un carburant à l'état de gaz liquéfié,
- une conduite d'alimentation (26), agencée entre un second réservoir de carburant (41) destiné à contenir le second carburant et la seconde pompe de carburant (4), destinée à délivrer le second carburant d'un second réservoir de carburant (41) à la seconde pompe de carburant (4),
- une pompe à haute pression (12), située en aval de la seconde pompe de carburant (4), destinée à mettre les premier et second carburants sous pression, et
- un injecteur (16) destiné à injecter les premier et second carburants sous pression dans une chambre de combustion du moteur à combustion interne, **caractérisé en ce que** la conduite d'alimentation comprend un raccord (33) raccordé à une sortie de la première pompe de carburant (1), le raccord (33) servant à raccorder une conduite d'une sortie de la première pompe de carburant (1) avec la conduite d'alimentation (26) pour que le premier carburant délivré par la première pompe de carburant (1) rejoigne la conduite d'alimentation (26), et
le système d'injection bicarburant comprenant en outre un dispositif de commande servant à commander les première et seconde pompes de carburant, le dispositif de commande étant agencé pour :
mettre en marche la première pompe de carburant (1) pour délivrer le premier carburant ;
mettre en marche la seconde pompe de carburant (4) pour délivrer le second carburant, et
mettre en marche simultanément les première et seconde pompes de carburant (1 ; 4) lors d'une transition du second carburant au premier carburant, pour mettre sous pression le premier carburant de façon à éjecter un reste du second carburant dans ou vers la pompe à haute pression (12).

2. Système d'injection bicarburant selon la revendication 1, dans lequel une vanne unidirectionnelle (6) est disposée entre la sortie de la première pompe de carburant (1) et le raccord (33).

3. Système d'injection bicarburant selon la revendication 1 ou 2, dans lequel une conduite de dérivation comprenant une vanne unidirectionnelle (22) est disposée en parallèle à la seconde pompe de carburant (4) pour dériver la seconde pompe de carburant.

4. Système d'injection bicarburant selon l'une quelconque des revendications précédentes, dans lequel le dispositif de commande est en outre agencé pour mettre en marche la première pompe de carburant (1) lors d'une instruction de désactivation, pour rincer au moins la pompe haute pression (12) avec le premier carburant.

5. Système d'injection bicarburant selon l'une quelconque des revendications précédentes, dans lequel des vannes unidirectionnelles (13, 13A) sont disposées au niveau d'une entrée et d'une sortie de la pompe haute pression (12), pour maintenir le carburant qui se trouve dans la pompe haute pression (12) dans un état non exploitation.

6. Système d'injection bicarburant selon l'une quelconque des revendications précédentes, dans lequel un capteur de pression (15) est prévu pour détecter une pression de carburant en aval de la pompe haute pression (12), une sensibilité du capteur de pression (15) étant adaptée sensiblement proportionnellement à une valeur de combustion des premier et second carburants ou étant adaptée pour corriger une combinaison de densité et de valeur de combustion plus faible des premier et second carburants.

7. Système d'injection bicarburant selon l'une quelconque des revendications précédentes, dans lequel une première pompe de carburant supplémentaire (2) est disposée en série avec la première pompe de carburant (1), le dispositif de commande étant en outre agencé pour mettre en marche simultanément la première pompe de carburant (1), la première pompe de carburant supplémentaire (2) et la seconde pompe de carburant au démarrage du moteur.

8. Système d'injection bicarburant selon l'une quelconque des revendications précédentes, comprenant :
- une première pompe de carburant (1) destinée à délivrer un premier carburant,
- une seconde pompe de carburant (4) destinée à délivrer un second carburant,
- une pompe haute pression (12), située en aval des première et seconde pompes de carburant (1, 4), destinée à mettre les premier et second carburants sous pression, et
- un injecteur (16) destiné à injecter les premier et second carburants sous pression dans une chambre de combustion du moteur à combustion interne,
une conduite de renvoi (24 ; 27 ; 31) prévue de la pompe haute pression (12) au second réservoir de carburant (41) du second carburant, la conduite de renvoi (24 ; 27 ; 31) étant destinée à renvoyer un excès du second carburant en retour dans le réservoir de second carburant (41).

9. Système d'injection bicarburant selon la revendication 8, dans lequel la conduite de renvoi est prévue à partir d'une dérivation de la pompe haute pression (12), la dérivation se trouvant en amont d'une partie à haute pression de la pompe haute pression (12).

10. Système d'injection bicarburant selon la revendication 8 ou 9, dans lequel la conduite de renvoi (27) est équipée d'une vanne anti-retour (3).

11. Système d'injection bicarburant selon l'une quelconque des revendications précédentes, comprenant un accumulateur, une conduite d'alimentation allant vers l'accumulateur étant raccordée en aval de la seconde pompe de carburant (4), une conduite de sortie de l'accumulateur étant raccordée en amont de la seconde pompe de carburant (4), la conduite d'entrée et la conduite de sortie comprenant toutes les deux, respectivement, une vanne de fermeture d'entrée d'accumulateur et une vanne de fermeture de sortie d'accumulateur, le dispositif de commande étant agencé pour ouvrir la vanne de fermeture de sortie d'accumulateur lors de la transition du second carburant au premier carburant.

12. Système d'injection bicarburant selon l'une quelconque des revendications précédentes, dans lequel une vanne de libération de surpression (38) est prévue d'une conduite de renvoi d'une rampe d'injecteurs à haute pression vers une conduite de renvoi (27) en direction du second réservoir de carburant (41).

13. Système d'injection bicarburant selon la revendication 12, dans lequel une vanne unidirectionnelle (37) est prévue de la conduite de renvoi de la pompe haute pression (12) à un côté d'entrée de la vanne de libération de surpression (38).

14. Véhicule à moteur comprenant un système d'injection bicarburant selon l'une quelconque des revendications précédentes.
